# EUROPEAN PATENT APPLICATION

(11) **EP 1 950 238 A2**
(43) Date of publication of application: **30.07.2008**
(21) Application number: 08101911.9
(22) Date of filing: 22.02.2008
(51) Int. Cl.: C08K 5/00

(54) **Flame resistant polymer composition with improved color stability**

(71) Applicant: Solvay Advanced Polymers, L.L.C., Alpharetta, GA 30005-3914 (US)
(72) Inventor: Norfolk, Linda M., CUMMING, GA 30041 (US)
(74) Representative: Jacques, Philippe

(57) **Abstract**

Flame resistant and color stabilized polymer composition (P) comprising :
- at least one semi-aromatic polyamide (PA) ;
- at least one flame retardant (FR) selected from the group consisting of phosphinic salts, diphosphinic salts, polymers of these and mixtures thereof ;
- at least one hindered phenol stabilizer (HPS) ;
- at least one phosphite and/or phosphonite stabilizer (PS) ;
with the proviso that said composition is either free of stabilizer containing at least one sterically hindered amine moiety (SHAS) or comprises said stabilizer (SHAS) in an amount not higher than about 15 % by weight of the total weight of (HPS) + (PS) + (SHAS).

## Description

The present invention broadly relates to a flame resistant polymer composition comprising a semi-aromatic polyamide, i.e. a polyamide the aromaticity of which derives either from the diacid monomer units or from the diamine monomer units. More specifically, the present invention relates to a flame resistant polymer composition comprising such a semi-aromatic polyamide which features improved color stability when exposed to heat and / or ultra-violet ("UV") light. The invention also relates to a process for the preparation of said flame resistant polymer composition, as well as to articles or parts of articles made of said composition.

Semi-aromatic polyamides (like those derived from phthalic acids and aliphatic diamines, i.e. polyphthalamides, or those derived from aromatic diamines and aliphatic diacids) are polymers having excellent mechanical, physical and chemical properties which make them useful for a wide variety of different applications.

For certain end-uses, it is desirable that compositions based on these semi-aromatic polyamides, notably those derived from aliphatic diamines and aromatic diacids, be flame retarded, so as to meet UL 94 V-0 standard for high degree of flame retardance.

A method generally used to impart flame retardance to polymers involves incorporating halogenated flame retardant agents.

However, especially in the case of the high melting semi-aromatic polyamides, halogenated flame retardants tend to thermally decompose at the molding temperature. The halogenated degradation products corrode the surfaces of the compounding extruder and impart poor surface appearance to the molded articles.

Several halogen free flame retardants and halogen free flame retarded polymer compositions have already been described to solve this problem. Hence, halogen free flame retarded polyamide compositions, wherein the polyamide is a semi-aromatic polyamide and the flame retardant is a metal phosphinate and/or diphosphinate, alone or in combination with other synergists, are relatively well described in the prior art (see for instance US 2005/011939 A1 and US 2006/0264542 A1).

These halogen free flame retarded polyamide compositions suffer, however, from another drawback, namely a distinct and visually noticeable color change when exposed to the degradative effect of heat and /or UV light, especially dramatic color shifts in natural and light shade flame retarded compositions. This is particularly cumbersome for the appearance of parts molded from such compositions which are visible to the consumer, such as connectors in personal electronic devices.

Proposals have already been made to cope with the problem of color change of nylon molding compositions when exposed to the degradative effect of UV light and/or heat. In US-A-5380774, for instance, there are disclosed nylon-based molding compositions comprising a stabilization system which includes, as essential components, (i) a hindered phenolic antioxidant, (ii) a phosphite compound and (iii) a hindered amine light stabilizer. Preferred nylons include nylon-6, nylon-6,6, nylon-6,9, nylon-6,10, nylon-6,12, nylon-11 and nylon-12. In example 1 of this document (see Table 1, columns 5 - 6), sample n° 11 shows that the incorporation of a ternary stabilization system, consisting of:
- tetrakis(methylene(3,5-di-t-butyl-4-hydroxyhydrocinnamate))methane (product Irganox^{®} 1010) (i),
- bis(2,4-di-t-butylphenyl) pentaerythritol diphosphite (product Ultranox^{®} 626) (ii) and
- bis(1,2,2,6,6-pentamethyl-4-piperidinyl)(3,5-di-t-butyl-4-hydroxybenzyl) butylpropanedioate (product Tinuvin^{®} 144) (iii),
in a nylon-6,6-based composition exposed to UV light and heat in a Xenon arc weatherometer, reduces the degree of color change (delta E) from 1.2 to 0.4. According to this proposal, the incorporation of a stabilization system comprising the three components (i), (ii) and (iii) is compulsory for actually reducing the color change of the nylon-based molding compositions exposed to UV light and heat. Binary stabilization systems, wherein component (iii) is absent, are not effective at all for this purpose, as is shown by the results obtained on sample n° 4 of the same example of US-A-5380774.

Applicants have made research in order to check whether a ternary stabilization system like the one described in US-A-5380774 would be successfully applicable to halogen free flame retarded semi-aromatic polyamide-based compositions. They have reached the surprising conclusion that this is not the case. Quite to the contrary, the incorporation of such a ternary stabilization system tends very surprisingly to increase the color change of semi-aromatic polyamide-based molding compositions exposed to UV light and heat.

From the foregoing discussion, it results that further research was thus needed in order to improve the color stability of halogen free flame retarded compositions based on semi-aromatic polyamides.

In particular, it is an objective of the invention to provide a flame retarded polyamide composition based on a semi-aromatic polyamide comprising recurring units derived from a dicarboxylic acid component including at least one aromatic dicarboxylic acid and/or at least one aliphatic dicarboxylic acid, on one side, and from a diamine component including, respectively, at least one aliphatic diamine or at least one aromatic diamine, on the other side, wherein said composition, besides complying with UL 94 V-0 standard for high degree of flame retardance, would also have excellent coloration stability without the shaped articles molded therewith encountering any of the degradative effect of heat and /or UV light previously mentioned.

The invention therefore provides a flame resistant and color stabilized polymer composition (P) comprising :
- at least one semi-aromatic polyamide (PA) ;
- at least one flame retardant (FR) selected from the group consisting of phosphinic salts, diphosphinic salts, polymers of these and mixtures thereof ;
- at least one hindered phenol stabilizer (HPS) ;
- at least one phosphite and/or phosphonite stabilizer (PS) ;
   with the proviso that said composition (P) is either free of stabilizer containing at least one sterically hindered amine moiety (SHAS) or comprises said stabilizer (SHAS) in an amount not higher than about 15 % by weight of the total weight of (HPS) + (PS) + (SHAS).

As mentioned, the composition (P) in accordance with the invention comprises at least one semi-aromatic polyamide (PA). For the purpose of the present description, the term "semi-aromatic polyamide" should be understood as defining any polymer of which more than 15 mole %, preferably more than 35 mole % and more preferably more than 50 mole % of the recurring units comprise at least one amide group (-CONH-), at least one arylene group, such as phenylene, naphthalene, p-biphenylene and metaxylylene, and at least one non aromatic group, such as an alkylene group.

Said recurring units can be obtained notably by (a) condensation reaction dicarboxylic acid monomer with an aromatic diamine monomer, (d) auto-condensation of an aromatic amino-acid, and combinations thereof.

Ortho-phthalic acid, isophthalic acid, terephthalic acid and 2,6-naphthalene dicarboxylic acid are examples of aromatic dicarboxylic acid monomers, while meta-phenylene diamine, meta-xylylene diamine and para-xylylene diamine are examples of aromatic diamine monomers.

Adipic acid and sebacic acid are examples of suitable aliphatic dicarboxylic acid monomers, while hexamethylene diamine, methylpentamethylene diamine and nonanediamine are examples of suitable aliphatic diamine monomers.

Preferably, the semi-aromatic polyamide is a polyphthalamide (PPA), PMXDA, or a mixture of a polyphthalamide and PMXDA. More preferably, the semi-aromatic polyamide is a polyphthalamide.

"PMXDA" is intended to denote herein a semi-aromatic polyamide of which more than 50 mole % of the recurring units, based on the total number of moles of recurring units, are obtained by the polycondensation reaction of at least one aliphatic dicarboxylic acid monomer, preferably adipic acid, with at least one aromatic diamine monomer, preferably meta-xylylene diamine.

PMXDA useful for the present invention comprises preferably at least 70 mole %, more preferably at least 80 mole %, still more preferably at least 90 mole % and the most preferably at least 95 mole % of recurring units obtained by condensation reaction of adipic acid and meta-xylylene diamine.

PMXDA as complying with these features are notably commercially available as IXEF^{®} polyamides from Solvay Advanced Polymers, L.L.C.

Another, still more preferred, semi-aromatic polyamide (PA) is chosen from the class of the polyphthalamides (PPA). For the purpose of the present description, the term "polyphthalamides" should be understood as defining any polymer of which at least 35 mole %, preferably at least 50 mole % of the recurring units are formed by the polycondensation reaction between at least one phthalic acid and at least one diamine. Phthalic acid includes any one of ortho-phthalic acid, isophthalic acid, terephthalic acid, and mixtures thereof.

The at least one diamine is advantageously an aliphatic diamine (such as for example : hexa- methylenediamine, nonanediamine, 2-methyl-1,5 pentadiamine, and 1,4-diaminobutane), preferably a C₃-C₁₂ aliphatic diamine, more preferably a C₆-C₉ aliphatic diamine, and still more preferably hexamethylenediamine.

Suitable polyphthalamides are commercially available as AMODEL^{®} polyphthalamides from Solvay Advanced Polymers, L.L.C.

According to the present invention, the polyphthalamide (PPA) is preferably a polyterephthalamide.

For the purpose of the present description, the term "polyterephthalamide" should be understood as defining any polymer of which at least 35 mole % of the recurring units, preferably at least 50 mole % of the recurring units, based on the total number of moles of recurring units, are formed by the polycondensation reaction between at least terephthalic acid with at least one aliphatic diamine.

More preferably, the polyterephthalamide is formed by the copolycondensation between, on one side, terephthalic acid monomer, optionally isophthalic acid monomer, and at least also one aliphatic dicarboxylic acid monomer, preferably adipic acid, and, on the other side, at least one aliphatic diamine monomer, preferably hexamethylene-diamine. Advantageously, the terephthalic acid monomer (TA) and the aliphatic dicarboxylic acid monomer (AA) may be used together as a mixture in a mole ratio TA / AA comprised between 4 / 1 and 0.5 / 1, preferably between 2 / 1 and 1 / 1.

Of course, more than one semi-aromatic polyamide (PA) may be used in the composition (P) in accordance with the invention.

The weight percent of the semi-aromatic polyamide (PA) in the total weight of the composition (P) is generally of at least 30 wt. %, preferably of at least 40 wt. %, and more preferably of at least 50 wt. %. Besides, the weight percent of the semi-aromatic polyamide (PA) in the total weight of the polymer composition (P) is generally of at most 80 wt. %, and preferably of at most 65 wt. %.

As mentioned, the composition (P) in accordance with the invention comprises at least one flame retardant (FR), as defined above. Said flame retardant (FR) is generally selected from the group consisting of a phosphinic salt (phosphinate) of the formula (I), a diphosphinic salt (diphosphinate) of the formula (II), polymers of the formula (I), polymers of the formula (II) and mixtures thereof, 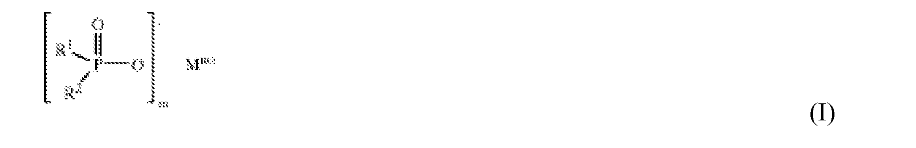 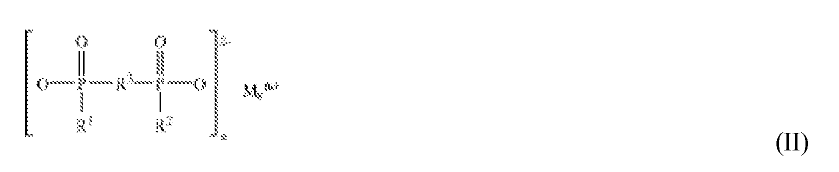 wherein : R¹, R² are identical or different and are C₁-C₆-alkyl, linear or branched, or aryl ; R³ is C₁-C₁₀-alkylene, linear or branched, C₆-C₁₀-arylene, alkylarylene or arylalkylene ; M is Mg, Ca, Al, Sb, Sn, Ge, Ti, Zn, Fe, Zr, Ce, Bi, Sr, Mn, Li, Na, K, or a protonated nitrogen base ; m is 1 to 4 ; n is 1 to 4 ; x is 1 to 4.

In formulae (I) and (II) :
M is preferably calcium, aluminum or zinc ;
the protonated nitrogen bases are preferably the protonated bases of ammonia, melamine, triethanolamine, in particular NH₄⁺ ;
R¹ and R², identical or different, are preferably C₁-C₆-alkyl, linear or branched, and/or phenyl, particularly preferably methyl, ethyl, n-propyl, isopropyl, n-butyl, tert-butyl, n-pentyl and/or phenyl.
R³ is preferably methylene, ethylene, n-propylene, isopropylene, n-butylene, tert-butylene, n-pentylene, n-octylene, or n-dodecylene. Another preferred meaning of R³ is phenylene or naphthylene.

Phosphinates are preferred as flame retardants (FR). Suitable phosphinates have been described in US 6,365,071 (the entire content of which being expressly incorporated hereinto by way of reference). Particularly preferred phosphinates are aluminum phosphinates, calcium phosphinates, and zinc phosphinates.

Synergistic combinations of the specified phosphinates with nitrogen-containing compounds which have more effective action as flame retardants (FR) than the phosphinates alone in very many polymers (see e.g. US 6,365,071, US 6,207,736, US 6,509,401, the entire content of each being also expressly incorporated hereinto by way of reference) are also in accordance with the invention.

The flame-retardant action of the phosphinates may be improved via combination with other known flame retardants, preferably nitrogen-containing synergists, or phosphorus/nitrogen flame retardants.

The nitrogen-containing synergists preferably comprise benzoguanamine, tris(hydroxyethyl) isocyanurate, allantoin, glycoluril, melamine, melamine cyanurate, dicyandiamide, guanidine, carbodiimides.

The nitrogen-containing synergists preferably comprise condensation products of melamine. By way of example, condensation products of melamine are melem, melam, or melon, or compounds of this type with a higher condensation level, or else a mixture of the same, and, by way of example, may be prepared by the process described in US 5,985,960 (the entire content of which being expressly incorporated hereinto by way of reference).

The phosphorus/nitrogen-containing synergists may comprise reaction products of melamine with phosphoric acid or with condensed phosphoric acids, or comprise reaction products of condensation products of melamine with phosphoric acid or condensed phosphoric acids, or else comprise a mixture of the specified products.

The reaction products with phosphoric acid or with condensed phosphoric acids are compounds which arise via reaction of melamine or of the condensed melamine compounds, such as melam, melem, or melon etc., with phosphoric acid. By way of example, these are dimelamine phosphate, dimelamine pyrophosphate, melamine phosphate, melamine pyrophosphate, melamine polyphosphate, melam polyphosphate, melon polyphosphate, and melem polyphosphate, and mixed polysalts, e.g. those described in US-A-6,121,445 and US-A-6,136,973 (the entire content of each being also expressly incorporated hereinto by way of reference).

The phosphorus/nitrogen-containing synergist of flame retardant (FR) may also be ammonium hydrogenophosphate, ammonium dihydrogenophosphate, or ammonium polyphosphate.

Other known flame retardant synergists may also be optionally included in the composition (P) in accordance with the invention. Examples of such synergists include metal oxides such as silica, iron oxide, titanium oxide, aluminum oxide, magnesium oxide and the like ; metal hydroxides and hydroxides oxides such as aluminum hydroxide, boehmite, magnesium hydroxide and the like ; metal salts such as a zinc borate, zinc carbonate, magnesium carbonate, barium carbonate, barium metaborate and the like.

Preferred such synergists are zinc borate, boehmite, aluminum oxide and mixtures thereof.

The weight percent of the flame retardant (FR) in the total weight of the composition (P) is generally of at least 3 wt. %, preferably of at least 7 wt. %, and more preferably of at least 8 wt. %. Besides, the weight percent of the flame retardant (FR) in the total weight of the polymer composition (P) is generally of at most 35 wt. %, and preferably of at most 25 wt. %.

When one (or more) flame retardant synergists is also optionally included in the composition (P), the weight percent of said synergist in the total weight of the composition (P) is generally of at least 0.1 wt. %, preferably of at least 0.5 wt. %, and more preferably of at least 1 wt. %. Besides, the weight percent of said synergist in the total weight of the polymer composition (P) is generally of at most 10 wt. %, and preferably of at most 5 wt. %.

As mentioned, the composition (P) in accordance with the invention comprises at least one hindered phenol stabilizer (HPS).

Hindered phenol stabilizers are well known by the skilled in the art. The hindered phenol stabilizer (HPS) contained in the composition (P) is a hindered phenol stabilizer in the broadest conventional meaning of the term. It can be viewed as any phenol derivative wherein the hydroxy substituent of the phenol cycle is sterically hindered by at least one bulky group (generally, a C₁-C₃₀ hydrocarbyl) fixed to a carbon atom in position ortho to the carbon atom bearing the hydroxy group of the phenol cycle (Rg). In general, the hydroxy substituent of the phenol cycle is sterically hindered by at least two bulky groups, at least one first bulky group (generally, a C₁-C₃₀ hydrocarbyl) being fixed to a carbon atom in position ortho to the carbon atom bearing the hydroxy group of the phenol cycle (Rg) and at least one other bulky group being fixed either to the other carbon atom in position ortho to the carbon atom bearing the hydroxy group of the phenol cycle (Rₕ), or to the carbon atom in position meta to the carbon atom bearing the hydroxy group and in position para to the first bulky group (Rᵢ). Very often, the hydroxy substituent of the phenol cycle is sterically hindered by two bulky groups, the first bulky group (generally, a C₁-C₃₀ hydrocarbyl) being fixed to a carbon atom in position ortho to the carbon atom bearing the hydroxy group of the phenol cycle (Rg) and the other bulky group being fixed to the other carbon atom in position ortho to the carbon atom bearing the hydroxy group of the phenol cycle (Rₕ).

As groups suitable for use as the bulking group R_{g}, Rₕ or Rᵢ, it can be cited methyl, ethyl, or an alpha-branched alkyl group of from 3 to 10 carbon atoms. Excellent results are used when tert-butyl [-C(CH₃)₃] is used as the bulking group R_{g}, Rₕ or Rᵢ.

Preferred hindered phenol stabilizers (HPS) are selected among the class of alkylated monophenols and the class of esterified hindered phenol substituted acid stabilizers (the latter being disclosed more fully in US-A- 3,285,855 and US-A-3,644,482 (the entire content of each being also expressly incorporated hereinto by way of reference).

Examples of alkylated monophenols are 2,6-di-tert-butyl-4-methyl-phenol ; 2-butyl-4,6-dimethylphenol ; 2,6-di-tert-butyl-4-ethylphenol ; 2,6-di-tert-butyl-4-n-butylphenol ; 2,6-di-tert-butyl-4-isobutylphenol ; 2,6-dicyclopentyl-4-methylphenol ; 2,6-dioctadecyl-4-methylphenol ; 2,4,6-tricyclohexylphenol ; 2,6-di-tert-butyl-4-methoxymethylphenol and mixtures thereof.

Examples of esterified hindered phenol substituted acid stabilizers are :
- esters of β-(3,5-di-tert-butyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like ;
- esters of β-(5-tert-butyl-4-hydroxy-3-methylphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like ;
- esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like ;
- esters of 3,5-di-tert-butyl-4-hydroxyphenylacetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like.

Among these hindered phenol stabilizers (HPS), those belonging to the class of esterified hindered phenol substituted acid stabilizers are preferred. Among these, the esters of β-(3,5-di-tert-butyl-4-hydroxyphenyl)propionic acid with polyhydric alcohols are especially preferred. The most preferred hindered phenol stabilizerd (HPS) which may be incorporated successfully into the composition (P) of the invention is pentaerythritol tetrakis [3-(3,5-di-t-butyl-4-hydroxyphenyl)propionate] commercially available from Ciba Specialty Chemicals under the trade name Irganox^{®} 1010.

The weight percent of the hindered phenol stabilizer (HPS) in the total weight of the composition (P) is generally of at least 0.05 wt. %, preferably of at least 0.1 wt. %. Besides, the weight percent of the hindered phenol stabilizer (HPS) in the total weight of the polymer composition (P) is generally of at most 3 wt. %, and preferably of at most 1 wt. %.

As mentioned, the composition (P) in accordance with the invention comprises at least one phosphite and/or phosphonite stabilizer (PS). The terms "phosphite and/or phosphonite stabilizer" are intended to denote herein any known trivalent phosphorus-containing stabilizing compounds.

Phosphonites suitable as stabilizers (PS) are phosphonites of the structure

R-[P(OR₁)₂]ₘ (I)

where :
R is a mono- or polyvalent aliphatic, aromatic, or heteroaromatic organic radical, and R₁ is a radical of the structure (II) 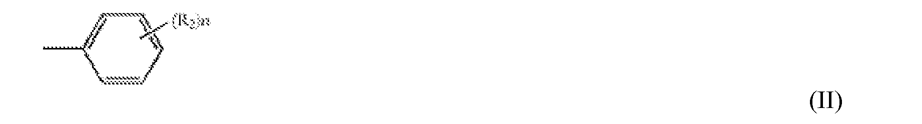 or the two radicals R1 form a bridging group of the structure (III) 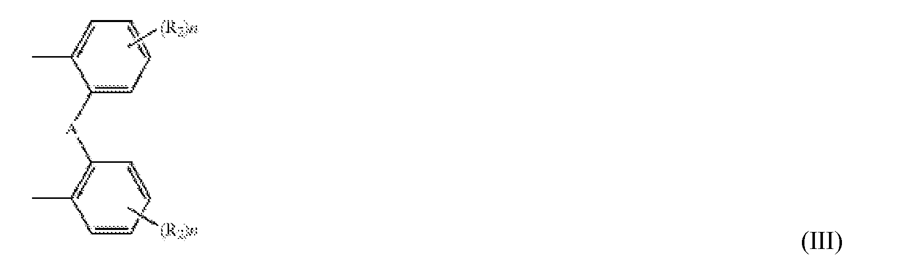 where A is a direct bond, O, S, C₁₋₁₈-alkylene (linear or branched), or
C₁₋₁₈-alkylidene (linear or branched), where R₂ independently of one another, are C₁₋₈-alkyl (linear or branched), C₁₋₁₂-alkoxy, or C₅₋₁₂-cycloalkyl, and n is from 0 to 5, and m is from 1 to 4.

Preferably :
R is a C₄₋₁₈-alkyl (linear or branched), a C₄₋₁₈-alkylene (linear or branched), a C₅₋₁₂-cycloalkyl, C₅₋₁₂-cycloalkylene, C₆₋₂₄-aryl or -heteroaryl ;
C₆₋₂₄-arylene or heteroarylene, which may also have further substitution ;
R₂, independently of one another, are C₁₋₈-alkyl (linear or branched), C₁₋₈-alkoxy, cyclohexyl ;
A is a direct bond, O, C₁₋₈-alkylene (linear or branched), C₁₋₈-alkylidene (linear or branched) ;
n is from 0 to 3, and m is from 1 to 3.

Particularly preferred R radicals are cyclohexyl, phenyl, phenylene and biphenyl radicals ; particularly preferred R₂ radicals are C₁₋₈-alkyl (linear or branched), C₁₋₈-alkoxy and cyclohexyl.

Most preferably, A is a direct bond, O, C₁₋₆-alkylidene (linear or branched), n is from 1 to 3, and m is 1 or 2.

Phosphites suitable as stabilizers (PS) are phosphites of the formula (IV) :

P(OR₁)₃ (IV)

where R₁ is as defined above.

Mixtures of phosphonites of the structure (I) in combination with phosphites of the formula (IV) are also usable to be incorporated in the composition (P) in accordance with the invention.

Examples of phosphites and phosphonites usable as stabilizers (PS) in accordance with the present invention are : triphenyl phosphate ; diphenyl alkyl phosphates ; phenyl dialkyl phosphates ; tris(nonylphenyl) phosphate ; trilauryl phosphate ; trioctadecyl phosphite ; distearyl pentaerythritol diphosphite ; tris(2,4-di-tert-butylphenyl) phosphate ; diisodecyl pentaerythritol diphosphite ; 2,2-methylene-bis(4,6-di-tert-butylphenyl)octylphosphite ; bis(2,4-di-tert-butylphenyl) pentaerythritol diphosphite ; (2,6-di-tert-butyl-4-methylphenyl) pentaerythritol diphosphite ; isodecyloxy pentaerythritol diphosphite ; bis(2,4-di-tert-butyl-6-methylphenyl) pentaerythritol diphosphite ; bis(2,4,6-tri-tert-butylphenyl) pentaerythritol diphosphite ; tristearyl sorbitol triphosphite ; tetrakis(2,4-di-tert-butylphenyl) 4,4'-biphenylenediphosphonite ; 6-isooctyloxy-2,4,8,10-tetra-tert-butyl-12- H-dibenzo[d,g]-1,3,2-dioxaphosphocin ; 6-fluoro-2,4,8,10-tetra-tert-butyl-1- 2-methyldibenzo[d,g]-1,3,2-dioxaphosphocin ; (2,4-di-tert-butyl-6-methyl- phenyl) methyl phosphate ; (2,4-di-tert-butyl-6-methylphenyl) ethyl phosphate, and the like.

Among these PS, those belonging to the class of phosphites are preferred. The most preferred PS which may be incorporated successfully into the composition (P) of the invention is bis(2,4-di-tert-butyl-6-methylphenyl) pentaerythritol diphosphite commercially available under the trade name Ultranox^{®} 626.

The weight percent of the phosphite and/or phosphonite stabilizer (PS) in the total weight of the composition (P) is generally of at least 0.05 wt. %, preferably of at least 0.2 wt. %. Besides, the weight percent of the hindered phenol stabilizer (HPS) in the total weight of the polymer composition (P) is generally of at most 3.5 wt. %, and preferably of at most 1.5 wt. %.

The composition (P) in accordance with the invention may further contain a variety of other polymers, additives, fillers, and the like, collectively called ingredients herein. Conventional ingredients of the composition (P) include particulate fillers and nucleating agents such as talc and silica, adhesion promoters, compatibilizers, curing agents, lubricants, metal particles, mold release agents, organic and/or inorganic pigments like TiO2 and carbon black, dyes, tougheners such as rubbers, plasticizers, anti-static agents, melt viscosity depressants such as liquid crystalline polymers, nucleating agents and the like.

In general, the weight of said optional ingredients, based on the total weight of the composition (P), is advantageously below 75 %, preferably below 50 %, more preferably below 25 % and still more preferably below 10 %.

In a particular embodiment, the composition (P) may further contain a fibrous reinforcing agent such as glass fiber and carbon fiber, especially an inorganic fibrous reinforcing agent such as glass fiber. The glass fiber used generally have a diameter of from about 6 to 15 5 µm, preferably from 8 to 13 µm and a length-to-thickness ratio in the range from 50 to 500, preferably in the range from 150 to 400. Thus, in said particular embodiment, the composition (P) comprises from 10 to 50 wt. %, in particular from 20 to 40 wt. %, of a reinforcing agent [all percentages based on the total weight of the composition (P)].

A critical and quite surprising feature of the composition (P) in accordance with the invention derives from the finding that its ability to resist to color changes, when exposed to UV light and/or heat, is greatly improved when said composition (P) is either free of stabilizer containing at least one sterically hindered amine moiety (SHAS) or comprises said stabilizer (SHAS) in an amount not higher than about 15 % by weight of the total weight of (HPS) + (PS) + (SHAS).

Stabilizers containing at least one sterically hindered amine moiety, commonly referred to as "hindered amine light stabilizers" (in short, HALS), are well known by the skilled in the art. The stabilizer (SHAS), which is absent from the composition (P) or which present in the composition (P) at a limited amount, is a HALS, in the broadest conventional meaning of the term. Typically, it is the same compound as the HALS contained in the polymer compositions described from col. 3,1. 35 to 52 of U.S. Pat. No. 5,380,774, the entire content thereof being expressly incorporated hereinto by reference. It may contain one and only one, two and only two, three and only three, or more than three sterically hindered amine moiety(-ies). It can be viewed as a piperidine derivative wherein the nitrogen atom of the piperidine cycle is sterically hindered by at least one bulky group (generally, a C₁-C₃₀ hydrocarbyl) fixed to a carbon atom in position ortho to the nitrogen atom of the piperidine cycle (Ra). In general, the nitrogen atom of the piperidine cycle is sterically hindered by at least two bulky groups, at least one bulky group (generally, a C₁-C₃₀ hydrocarbyl) being fixed to a carbon atom in position ortho to the nitrogen atom of the piperidine cycle (Ra) and at least one other bulky group being fixed to the other carbon atom in position ortho to the nitrogen atom of the piperidine cycle (Rc). Very often, the nitrogen atom of the piperidine cycle is sterically hindered by at least four bulky groups fixed to a carbon atom of the piperidine cycle, two bulky groups (generally, a C₁-C₃₀ hydrocarbyl) being fixed to a carbon atom in position ortho to the nitrogen atom of the piperidine cycle (Ra and Rb) and two other bulky groups (generally, a C₁-C₃₀ hydrocarbyl) being fixed to the other carbon atom in position ortho to the nitrogen atom of the piperidine cycle (Rc and Rd). Typically, the stabilizer (SHAS) is a compound comprising at least one 2,2,6,6-tetrasubstituted piperidinyl group of general formula 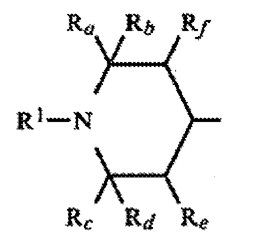 wherein
Rₐ represents alkyl having 1-6 carbon atoms,
R_{b} represents alkyl having 1-6 carbon atoms,
R_{c} represents alkyl having 1-9 carbon atoms, phenyl, benzyl or phenylethyl,
R_{d} represents alkyl having 1-6 carbon atoms, or
R_{c} and R_{d} together represent tetra- or pentamethylene,
Rₑ represents hydrogen, alkyl having 1-5 carbon atoms, alkenyl or alkynyl having 3-4 carbon atoms or aralkyl having 7-8 carbon atoms,
R_{f} represents hydrogen, alkyl having 1-5 carbon atoms, alkenyl or alkynyl having 3-4 carbon atoms, or aralkyl having 7-8 carbon atoms, with Rₑ and R_{f} being mutually exchangeable, and
R¹ represents hydrogen, - O^{•}, - OH, alkyl having 1-12 carbon atoms, alkenyl having 3 or 4 carbon atoms, propargyl, benzyl or a group of the formula -CH2-CH(OR⁵)-R⁴ wherein R⁴ represents hydrogen, methyl or phenyl and R⁵ represents hydrogen or a group A-CO-, or R¹ represents a group A-CO-, and in both cases A represents alkyl having 1-12 carbon atoms, alkenyl having 2 or 3 carbon atoms, cyclohexyl, phenyl, benzyl, a phenyl or phenylethyl group substituted by 2 alkyl groups each having 1-4 carbon atoms and a hydroxyl group, alkylamino having 1-12 carbon atoms, dialkylamino having 2-16 carbon atoms, anilino, alkoxy having 1-12 carbon atoms, benzyloxy or phenoxy, Rₐ, R_{b} and R_{d} can be straight-chain or branched-chain alkyl groups having 1-6 carbon atoms, such as methyl, ethyl, propyl, butyl, isobutyl, isopentyl or n-hexyl.
R_{c} can be a straight-chain or branched-chain alkyl group having 1-9 carbon atoms, such as methyl, ethyl, propyl, n-butyl, isobutyl, isopentyl, n-hexyl, 2-ethylhexyl, n-nonyl or isononyl.
Rₑ and R_{f} can be alkyl groups having up to 5 carbon atoms, with Rₑ containing possibly 1 carbon atom less than R_{b} and the position of Rₑ and R_{f} being exchangeable. Rₑ and R_{f} can also represent alkenyl or alkynyl, for example allyl, methallyl, 2-butenyl or propargyl, especially allyl. Rₑ and R_{f} can also represent aralkyl, for example benzyl, phenylethyl or methylbenzyl, preferably benzyl.
R¹ and A as an alkyl group having 1-12 carbon atoms can be a primary alkyl group, such as a methyl, ethyl, n-propyl, n-butyl, n-hexyl, n-octyl, n-decyl or n-dodecyl group.
R¹ and A as an alkenyl group can be, e.g., an allyl, methallyl or butenyl group.
If R¹ and/or R⁵ represent a group A-CO-, then this can be, depending on the meaning of A, a carbonic acid radical such as acetyl, propionyl, butyryl, capronyl, caprylol, lauroyl, acryloyl, crotonoyl, phenylacetyl, β-(3,5-di-tert. butyl-4-hydroxyphenyl)-propionyl or benzoyl ; or a carbamoyl radical such as methylcarbamoyl, butylcarbamoyl, dodecylcarbamoyl, diethylcarbamoyl, dihexylcarbamoyl, dioctylcarbamoyl or phenylcarbamoyl ; or a carbonic ester radical such as ethoxycarbonyl, isopropoxycarbonyl, 2-ethylhexyloxycarbonyl, dodecyloxycarbonyl, benzyloxycarbonyl or phenoxycarbonyl.

Often, Rₐ, R_{b}, R_{c} and R_{d} are methyl. Rₑ and R_{f} are often hydrogen. R¹ is often hydrogen, - O^{•}, alkyl having 1-4 carbon atoms, allyl, acetyl, alkoxy having 1-12 carbon atoms or phenoxy.

The stabilizer (SHAS) can be monomeric, such as 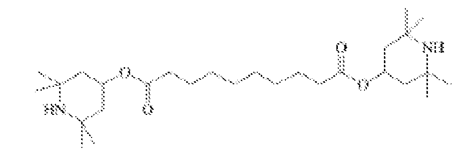 (commercially available from Ciba Specialty Chemicals as Tinuvin^{™} 770), or it can be polymeric, such as 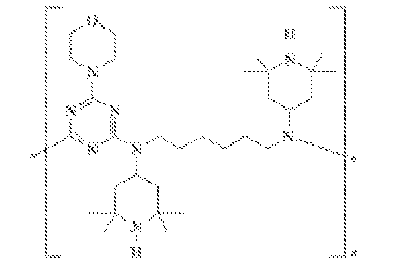 (commercially available from Cytec Industries as CYASORB^{®} UV-3346).

The stabilizer (SHAS) may be notably selected from esters and amides from 4-hydroxy and 4-amino-polyalkylpiperidines and hydroxybenzylmalonic acids substituted at the central carbon atom with an organic residue, preferably alkyl-, esteralkyl- or phosphonoalkyl-groups as more fully disclosed in U.S. Pat. No. 4,198,334 to Rasberger, the entire content thereof being also expressly incorporated hereinto by reference.

The stabilizer (SHAS) is commonly reported - correctly or wrongly - to impart to plastics excellent protection against thermal-oxidative ageing, such as light-induced ageing. Then, the piperidinyl nitroxide radical of the cyclic amine is deemed to be the actual light stabilizer, the piperidinyl nitroxide radical being generally generated in situ by photo-oxidation and photohydrolysis, depending on the substituent on the nitrogen atom ; the piperidinyl nitroxide radical may be thought of as a catalytic radical scavenger, and may be involved in a cycle of recations known as the Denisov cycle.

Preferably, the composition (P) in accordance with the invention is either free of stabilizer (SHAS) or comprises stabilizer (SHAS) in an amount not higher than about 10 % by weight of the total weight of (HPS) + (PS) + (SHAS). Still more preferably, it is either free of stabilizer (SHAS) or comprises stabilizer (SHAS) in an amount not higher than about 5.0 % by weight of the total weight of (HPS) + (PS) + (SHAS). Still more preferably, it is either free of stabilizer (SHAS) or comprises stabilizer (SHAS) in an amount not higher than about 1.0 % by weight of the total weight of (HPS) + (PS) + (SHAS). The most preferably, the composition (P) is free of stabilizer (SHAS).

The essential components (FR) + (PS) + (HPS) of the composition (P) along with the said optional additional ingredients may be incorporated into the semi-aromatic polyamide (PA) by a variety of different methods and procedural steps which aim to provide their thorough mixture. For example, it is possible to incorporate the above mentioned components and optional additional ingredients by mixing them into the polymer at an early stage : at the start or at the end of the (co)polycondensation of the semi-aromatic polyamide, or in a subsequent compounding process. A certain method comprises dry mixing the essential components and optional ingredients in powder or granular form, in appropriate proportions, using e.g. a mechanical blender, such as a drum blender and the like. The mixture is then melted batchwise or in a continuous device, like extruders and the like, extruding the mixture into strands and chopping the strands into pellets. The mixture to be melted may also be prepared by well known masterbatch methods. The continuous melting device may also be fed with the components and ingredients of the composition (P) added separately without dry premixing.

A certain other method comprises dissolving the polymer(s) (PA) in one or more organic solvents (or dissolving the said polymer(s) in an organic solvent, then causing the dissolved polymer(s) to precipitate by the addition of a non solvent, and finally molding the recovered dried cake).

The present invention also relates to shaped articles or parts of shaped articles comprised of the composition (P).

The shaped articles according to the invention are advantageously electric or electronic parts.

The shaped articles according to the invention are advantageously formed by molding. Various molding techniques may be used to form shaped articles or parts of shaped articles from the composition (P). Powders, pellets, beads, flakes, reground material or other forms of the composition (P) may be molded, with or without liquid or other additives, premixed or fed separately. In particular embodiments, the composition (P) may be compression molded. Exact conditions may be determined by trial and error molding of small samples.

Upper temperature limits may be estimated from thermal analysis such as thermogravimetric analysis. Lower temperature limits may be estimated from Tg as measured for example by dynamic mechanical thermal analysis (DMTA), differential scanning calorimetry (DSC), or like methods. The composition (P) can be injection molded. One skilled in the art will recognize the factors influencing injection moldability including the material's stress relaxation properties and the temperature dependence of melt viscosity.

The composition (P) can also be extruded. Non-limiting examples include angle, channel, hexagonal bar, hollow bar, I-beam, joining strip, tubes, rectangular tube, rod, sheet, plate, square bar, square tube, T-section, thin-walled tubes, microtubes, strands, rectangular strands, or other shapes as is required for a particular application. Related to extrusion is pultrusion, wherein a fiber reinforcement, such as glass or carbon fiber, is continuously added to a matrix of extruded composition (P) at molten state ; composites with exceptional moduli and compressive strength will result.

The present invention is described in greater detail below by referring to the non limitative examples.

### Examples

Components and ingredients used
(1) Semi-aromatic polyamide (PA 1) : AMODEL^{®} 6000 : polyphtalamide resulting from the polycondensation of, respectively, 27.5 mol % of terephtalic acid and 22.5 mol % of adipic acid with 50 mol % of hexamethylenediamine.
(2) Semi-aromatic polyamide (PA 2) : AMODEL^{®} 4002 : polyphtalamide resulting from the polycondensation of, respectively, 2325 mol % of terephtalic acid and 17.5 mol % of adipic acid with 50 mol % of hexamethylenediamine.
(3) Fiberglass : chopped fiberglass, 10 µm diameter, 3.2 mm length.
(4) Flame retardant (FR) : product Exolit^{®} OP 1230 commercialized by Clariant, comprising a metal phosphinate.
(5) Hindered phenol stabilizer (HPS) : pentaerythritol tetrakis [3-(3,5-di-t-butyl-4-hydroxyphenyl)propionate] (product Irganox^{®} 1010).
(6) Phosphite stabilizer (PS) : bis(2,4-di-tert-butyl-6-methylphenyl) pentaerythritol diphosphite (product Ultranox^{®} 626).
(7) Stabilizer containing at least one sterically hindered amine moiety (SHAS) : 1,3-benzenedicarboxamide N,N' bis(2,2,6,6-tetramethyl-4-piperidinyl)(product Nylostab^{®} S-EED commercialized by Clariant).
(8) Pigment: mixture of white J 734, red 2199 D, yellow V-9400, dark blue V-3285 and channel black J230 pigments.

### Examples 1R, 2, 3R and 4R

### (Examples 1R, 3R and 4R are given for comparative purposes)

### - Preparation of the Polymer Compositions

For example 2, polymer composition (P) was prepared by compounding components and ingredients (1), (3), (4), (5), (6) and (8) in the ratios given in Table 1.

For comparative purposes (examples 1R, 3R and 4R), polymer compositions were prepared by compounding, in the ratios also given in Table 1 :
- only components and ingredients (1), (3), (4) and (8) (example 1R) ;
- only components and ingredients (1), (3), (4) (5) and (8) (example 3R) ;
- only components and ingredients (1), (3), (4) (6) and (8) (example 4R).

Components and ingredients were compounded by means of a W&P ZSK 26 twin screw extruder using identical operating conditions for comparability (temperature profiles, screw speed, feeding modalities, etc.). Compounding conditions were set to obtain a 340°C melt temperature at the die.

Components and ingredients (1), (5) (when used), (6) (when used) and (8) were mixed together and then fed into the feed throat of the ZSK 26 twin screw extruder. Ingredients (3) and (4) were fed in separate feeders.

**Table 1**

| Components and ingredients (parts by weight) | Example 1R (comparative) | Example 2 | Example 3R (comp.) | Example 4R (comp.) |
|---|---|---|---|---|
| (1) PA 1 | 52 | 50.5 | 50.5 | 50.5 |
| (3) Fiberglass | 30 | 30 | 30 | 30 |
| (4) FR | 18 | 18 | 18 | 18 |
| (5) HPS | - | 0.6 | 1.5 | - |
| (6) PS | - | 0.9 | - | 1.5 |
| (8) pigment | 3.7 | 3.7 | 3.7 | 3.7 |

### - Properties of the Polymer Compositions

The polymer compositions of examples 2 and 3 (according to the invention), and the polymer composition according to comparative examples 1R, 4R and 5R were tested and classified for the flame retardancy, on the basis of the UL 94 (Underwriters Laboratories) test. The samples were molded into 0.8 mm thick flame bars and 5 x 7.5 cm color chips for testing. The flame bars were used for an internal UL vertical burn screening test. The color chips were used for 150° C heat exposure testing and for UV exposure testing. For the heat exposure testing, the chips were placed on rack which was then put in a 150°C oven for 48 hours. The color of the chips before and after the heat treatment was measured on a spectrometer. The degree of color change was quantified as the total color difference (delta E*), calculated in all cases for illuminant "D-65", 10-degree observer, specular included, expressed in CIELab units, in accordance with ASTM D-2244. The UV exposure testing was carried out during 300 hours in accordance with standard ASTM D 4459.

The results of these tests are reported in Table 2.

**Table 2**

| | Example 1R (comparative) | Example 2 | Example 3 R (comp.) | Example 4R (comp.) |
|---|---|---|---|---|
| UL 94 flame test | V0 | V0 | V0 | V0 |
| Color difference (delta E*) (Heat exposure testing) | 18.635 | 9.504 | 9.769 | 14.909 |
| Color difference (delta E*) (UV exposure testing) | 2.816 | 0.6373 | 1.54 | 0.65 |

From the foregoing examples, it is apparent that the polymer composition (P) in accordance with the invention has excellent flame resistance (UL 94 V0 at 0.8 mm), combined with improved color stability in comparison with the semi-aromatic polyamide-based composition prepared and tested for comparative purposes and containing neither a HPS nor a PS component (example 1R) or only either the sole HPS component (example 3R) or the sole PS component (example 4R).

### Examples 5 and 6R

### (Example 6R is given for comparative purposes)

### - Preparation of the Polymer Compositions

For example 5, polymer composition (P) was prepared by compounding - in the same operating conditions as in the foregoing examples above - components and ingredients (2), (3), (4), (5) and (6) in the ratio given in Table 3. For comparative purposes (example 6R), a polymer composition was prepared by compounding the same components and ingredients as in example 6, together with additional component (7), in the ratios also given in Table 3 :

**Table 3**

| Components and ingredients (parts by weight) | Example 5 | Example 6R (comparative) |
|---|---|---|
| (2) PA 2 | 50.5 | 50.5 |
| (3) Fiberglass | 33 | 33 |
| (4) FR | 15 | 15 |
| (5) HPS | 0.375 | 0.3 |
| (6) PS | 1.125 | 0.9 |
| (7) Stabilizer containing at least one sterically hindered amine moiety (SHAS) | - | 0.3 |

### - Properties of the Polymer Compositions

The polymer compositions of example 5 (according to the invention), and the polymer composition according to comparative example 6R were tested and classified for the flame retardancy and for their color stability, using the same operating conditions and standards as in the foregoing examples. The results of these tests are reported in Table 4.

**Table 4**

| | Example 5 | Example 6R (comparative) |
|---|---|---|
| UL 94 flame test | V0 | V0 |
| Color difference (delta E*) (Heat exposure testing) | 15.846 | 21.882 |
| Color difference (delta E*) (UV exposure testing) | 3.530 | 5.679 |

The comparison of these examples shows the deterioration in results obtained, as far as color stability is concerned, when a sterically hindered amine light stabilizer (component (8)) is further incorporated in the semi-aromatic polyamide-based composition (example 7R).

## Claims

1. Flame resistant and color stabilized polymer composition (P) comprising :
- at least one semi-aromatic polyamide (PA) ;
- at least one flame retardant (FR) selected from the group consisting of phosphinic salts, diphosphinic salts, polymers of these and mixtures thereof ;
- at least one hindered phenol stabilizer (HPS) ;
- at least one phosphite and/or phosphonite stabilizer (PS) ;
with the proviso that said composition (P) is either free of stabilizer containing at least one sterically hindered amine moiety (SHAS) or comprises said stabilizer (SHAS) in an amount not higher than about 15 % by weight of the total weight of (HPS) + (PS) + (SHAS).

2. Polymer composition according to claim 1, **characterized in that** it is either free of stabilizer (SHAS) or comprises stabilizer (SHAS) in an amount not higher than about 5.0 % by weight of the total weight of (HPS) + (PS) + (SHAS).

3. Polymer composition according to claim 2, **characterized in that** it is free of stabilizer (SHAS).

4. Polymer composition according to anyone of the preceding claims, **characterized in that** the semi-aromatic polyamide (PA) is a polyterephthalamide.

5. Polymer composition according to anyone of the preceding claims, **characterized in that** the flame retardant (FR) is selected from the group consisting of a phosphinic salt of the formula (I), a diphosphinic salt of the formula (II), polymers of the formula (I), polymers of the formula (II) and mixtures thereof, 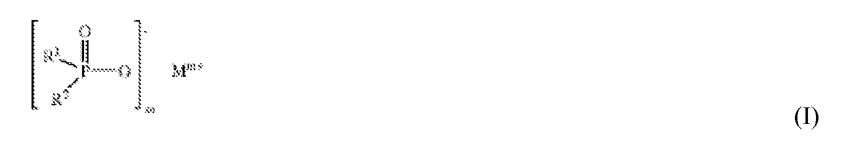 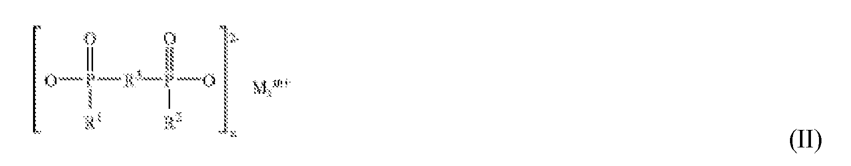 wherein : R¹, R² are identical or different and are C₁-C₆-alkyl, linear or branched, or aryl ; R³ is C₁-C₁₀-alkylene, linear or branched, C₆-C₁₀-arylene, alkylarylene or arylalkylene ; M is Mg, Ca, Al, Sb, Sn, Ge, Ti, Zn, Fe, Zr, Ce, Bi, Sr, Mn, Li, Na, K, or a protonated nitrogen base ; m is 1 to 4 ; n is 1 to 4 ; x is 1 to 4.

6. Polymer composition according to anyone of the preceding claims, **characterized in that** the hindered phenol stabilizer (HPS) is selected among esterified hindered phenol substituted acid stabilizers.

7. Polymer composition according to anyone of the preceding claims, **characterized in that** the stabilizer (PS) is selected among phosphites of the formula (IV) :
P(OR₁)₃ (IV)
where R₁ is a radical of the structure (II) 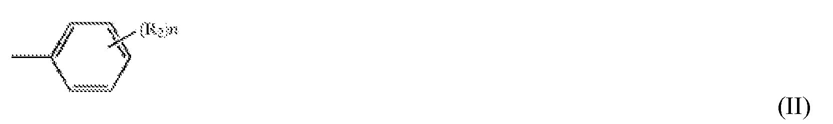 or the two radicals R1 form a bridging group of the structure (III) 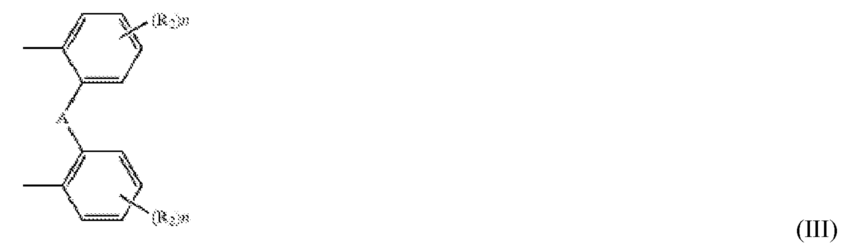 where A is a direct bond, O, S, C₁₋₁₈-alkylene (linear or branched), or C₁₋₁₈-alkylidene (linear or branched), where R₂ independently of one another, are
C₁₋₈-alkyl (linear or branched), C₁₋₁₂-alkoxy, or C₅₋₁₂-cycloalkyl, and n is from 0 to 5, and m is from 1 to 4.

8. Polymer composition according to anyone of the preceding claims, **characterized in that** it further contains a fibrous reinforcing agent.

9. Polymer composition according to anyone of the preceding claims, **characterized in that** the weight percent of the semi-aromatic polyamide (PA) in the total weight of the composition is of at least 30 wt. % and of at most 80 wt. %.

10. Process for the preparation of a polymer composition (P) according to anyone of the preceding claims, which comprises dry mixing the constitutive components in powder or granular form, in appropriate proportions, and melting then the mixture in a continuous device, shaping the mixture into strands and chopping the strands into pellets.

11. Shaped article or part of a shaped article comprising the polymer composition according to anyone of claims 1 to 9, or prepared by the ethod according to claim 10.
